# EUROPEAN PATENT APPLICATION

(11) **EP 3 811 812 A1**
(43) Date of publication of application: **28.04.2021**
(21) Application number: 19204544.1
(22) Date of filing: 22.10.2019
(51) Int. Cl.: A45C 9/00

(54) **SUITCASE PUSHCHAIR AND SEAT FOR A SUITCASE PUSHCHAIR**

(71) Applicant: Glagla, Sebastian Emanuel, 5301 Siggenthal Station (CH)
(72) Inventor: Glagla, Sebastian Emanuel, 5301 Siggenthal Station (CH)
(74) Representative: Wu, Sau Ming Samuel

(57) **Abstract**

The invention provides a child seat (100) configured to be a part of a suitcase pushchair (300). The child seat (100) comprises a seatback (102); a base portion (130) attached or attachable to the upper portion (102) or to a suitcase (200); one or more retaining straps (112a, 112b, 116) for securing a child; a first set of attachment points (108a, 108b, 110a, 110b) and a second set of attachment points (110a, 110b, 124). The first set of attachment points (108a, 108b, 110a, 110b) are located to correspond to first complementary attachment points (212, 214) of a wheeled suitcase (200) so that in a first configuration (300) the upper portion (102) can be releasably fastened to the suitcase (200) and, when the upper portion (102) is fastened to the suitcase (200), the upper portion (102) and the suitcase (200) constitute a suitcase pushchair. The second set of attachment points (110a, 110b, 124) are located to correspond to second complementary attachment points (220, 216) of the suitcase (200) so that in a second configuration (300) the upper portion (102) can be releasably fastened to an external portion of the suitcase (200) to which the upper portion (102) conforms or is conformable. The invention also provides a convertible suitcase pushchair (300), comprising such a child seat (100) and suitcase (200).

## Description

### Field of the Invention

The invention pertains to a suitcase pushchair, to a seat for a suitcase pushchair, and to a suitcase that is convertible into a pushchair suitcase.

### Background of the Invention

U.S. Patent Application Publication No. 2008/0164667 discloses a convertible suitcase stroller apparatus that comprises a suitcase with a handle assembly that is reconfigurable between a storage configuration and a deployed configuration. The two handle stems and a handgrip between the upper ends of the handle stems. The handle also includes a crumplable fabric seatback material between the handle stems when the handle is deployed, and a child seatbelt securable around a child seated the suitcase. The back of a child seated on the suitcase is supported against the fabric seatback material. Thus, the suitcase stroller apparatus is convertible between a minimum space occupying configuration, a suitcase only toting configuration and a child toting configuration.

International Patent Application Publication No. WO 2015/145118 discloses a luggage apparatus that comprises a body portion, a handle and a stabilizing mechanism, the stabilizing mechanism being movable with respect to the body portion from a stowed position to a deployed position. With the stabilizing mechanism in the deployed position, the body portion can be tilted from an upright position to an inclined position, in the inclined position the stabilizing mechanism at least partially supporting the body portion. In an embodiment, a load-bearing section of the luggage apparatus defines a seat for an infant or a child, the seat comprising a bottom support defined by the body portion and a back support defined by the handle.

It should be noted that, herein, the term suitcase pushchair is used to describe a combination apparatus that can function as both a suitcase and a pushchair. It should also be noted that the term pushchair may be used interchangeably with the term 'stroller' or 'pusher'.

### Summary of the Invention

It is an object of the present invention to provide an alternative to existing apparatuses, including-in some embodiments-an alternative that can provide a sturdy child seat without overly compromising compactness of the suitcase pushchair.

According to a first aspect of the invention, there is provided an upper portion of a child seat, the child seat being configured to be a part of a suitcase pushchair, the upper portion comprising:
a seatback;
one or more retaining straps for securing a child;
a first set of attachment points and a second set of attachment points;
wherein the first set of attachment points (typically at a lower periphery of the seatback) are located to correspond to complementary first attachment points of a wheeled suitcase so that in a first configuration the upper portion can be releasably fastened to the suitcase and, when the upper portion is fastened to the suitcase, the upper portion and the suitcase constitute a suitcase pushchair; and the second set of attachment points are located to correspond to complementary second attachment points of the suitcase so that in a second configuration the upper portion can be releasably fastened to an external portion of the suitcase to which the upper portion conforms or is conformable.

Thus, in the second configuration the upper portion is stowed in a manner that does not compromise the storage capacity of the suitcase. In the second configuration the upper portion is typically located on or over that wall or side of the suitcase that, in a conventional suitcase, is openable to provide access to the interior of the suitcase. Hence, the upper portion may, in some embodiments, have to be detached from the suitcase when it is desired to access the interior of the suitcase. In other embodiments, however, the upper portion may be attached in the second configuration to a lid or opening portion of the suitcase such that the upper portion does not impede access to the interior. In still further embodiments, the upper portion may be attached in the second configuration to a side or wall of the suitcase other than (e.g. opposite) the lid or opening portion such that, again, the upper portion does not impede the opening of the lid or access to the interior.

In an embodiment, the upper portion comprises left and right side walls. The side walls may be integral with the seatback. Each of the side walls may include at least one attachment point of the first set of attachment points.

In an embodiment, the retaining straps comprise two shoulder straps and a waist strap. In an example, the shoulder straps are releasably connectable to the waist strap.

In an embodiment, the first set of attachment points and the second set of attachment points overlap (that is, share common elements). That is, some of the first set of attachment points may also be in the second set of attachment points, reducing the number of attachment points that the upper portion need include.

In an embodiment, one or more attachment points of the first and/or second set of attachment points comprise apertures corresponding to complementary bolts or retaining pins of the suitcase.

In an embodiment, one or more attachment points of the first and/or second set of attachment points comprise keyed apertures corresponding to headed posts of the suitcase. In an embodiment, one or more attachment points of the first and/or second set of attachment points comprise headed posts corresponding to keyed apertures of the suitcase.

The terms 'keyed apertures' and 'headed posts' refer to a fastener arrangement in which a post with a (typically circular) head is inserted into a larger end of a keyhole-shaped aperture; the post is then moved into an engaged configuration by sliding the post to a smaller end of that aperture. The head is larger than the smaller end of that aperture (such as by having a larger diameter) such that the post cannot be withdrawn without first being moved back to the larger end of the aperture. Such a fastener arrangement may be suitable, for example, for fastening a lower forward periphery of the upper portion to the suitcase with the lower forward periphery attached with bolts of snap fasteners, or vice versa.

In an embodiment, one or more attachment points of the first and/or second set of attachment points comprise snap fastener elements corresponding to complementary snap fastener elements of the suitcase.

In certain embodiments, the upper portion is foldable or bendable so as to conform to the external portion of the suitcase.

In some embodiments, the child seat comprises the upper portion and a seat portion of the suitcase suitably located relative to the upper portion in the first configuration such that the upper portion and the seat portion of the suitcase define the child seat.

According to a second aspect of the invention, there is provided a child seat configured to be a part of a suitcase pushchair, the child seat comprising:
an upper portion according to the first aspect; and
a base portion attached or attachable to the upper portion or to the suitcase.

In an embodiment, the base portion comprises a further retaining strap releasably securable to one or more of the retaining straps.

In an embodiment, the base portion includes one or more attachment points of the first set of attachment points.

In an embodiment, the base portion is configured to be mounted on or to a handle stem of the suitcase.

According to a third aspect of the invention, there is provided a wheeled suitcase configured to be a part of a suitcase pushchair, the suitcase comprising:
a first set of attachment points and a second set of attachment points;
wherein the first set of attachment points are located to correspond to first complementary attachment points of an upper portion of a child seat according to the second aspect so that in a first configuration the suitcase can be releasably fastened to the upper portion and, when the suitcase is fastened to the upper portion, the upper portion and the suitcase constitute a suitcase pushchair; and the second set of attachment points are located to correspond to second complementary attachment points of the upper portion so that in a second configuration the upper portion can be releasably fastened to an external portion of the suitcase to which the upper portion conforms or is conformable.

According to a fourth aspect of the invention, there is provided convertible suitcase pushchair, comprising:
a child seat according to the second aspect; and
a suitcase according to the third aspect;
wherein the convertible suitcase pushchair is convertible between:
   a first configuration in which the child seat is releasably fastened to the suitcase such that the convertible suitcase pushchair can be employed simultaneously as a suitcase and a pushchair; and
   a second configuration in which at least the upper portion of the child seat is releasably fastened to an external portion of the suitcase to which the upper portion conforms or is conformable such that the convertible suitcase pushchair can be employed as a suitcase and not as a pushchair.

### Brief Description of the Drawing

In order that the invention be better understood, embodiment will now be described, by way of example, with reference to the accompanying drawing in which:
Figure 1 is a schematic view of a child seat for a suitcase pushchair according to an embodiment of the present invention;
Figure 2 is a schematic view of the protective shell of the child seat of figure 1;
Figure 3 is a schematic cross-sectional view of the child seat of figure 1;
Figure 4 is a schematic view of a suitcase pushchair according to an embodiment of the present invention in a first configuration, the suitcase pushchair comprising the child seat of figure 1 and an item of hand luggage; and
Figure 5 is a schematic view of a suitcase pushchair of figure 4 in a second configuration.

### Description of the Invention

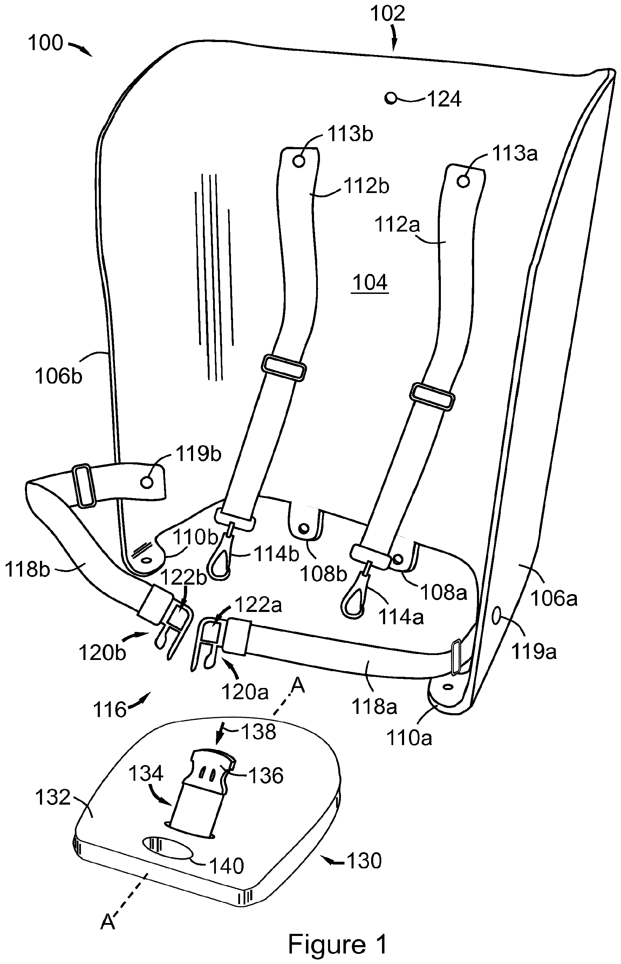

Figure 1 is a schematic view of a child seat 100 for a suitcase pushchair according to an embodiment of the present invention. Child seat 100 includes a main body in the form of a supportive and protective shell 102 that includes a seatback in the form of a rear wall 104 and left and right seat side walls 106a, 106b. Protective shell 102 also includes two pairs of attachment tabs: a first pair 108a,108b that project downwardly from a lower periphery of rear wall 104, and a second pair 110a,110b that project inwardly from lower forward peripheries of respective side walls 106a, 106b. Attachment tabs 108a, 108b, 110a, 110b each includes an attachment hole for receiving a bolt or other fastener, for fastening child seat 100 to a piece of luggage (not shown). Protective shell 102 (including rear wall 104, left and right side walls 106a, 106b, and attachment tabs 108a, 108b, 110a, 110b) is formed integrally of polypropylene. In other embodiments other materials, such as polycarbonate, aluminum or ABS (acrylonitrile-butadiene-styrene), may be suitable.

Child seat 100 includes one or more retaining straps for securing a child, in this example comprising two shoulder straps 112a, 112b and a waist strap 116. Each strap is of a suitable material such as woven polyester, and is adjustable in length in a conventional manner. Shoulder straps 112a, 112b are permanently fastened at their upper ends to rear wall 104 with suitable fasteners, such as rivets or bolts 113a, 113b, and are provided at their lower ends with attachment mechanisms for releasably attaching shoulder straps 112a, 112b to waist strap 116, in the form-in this example-of safety hooks 114a, 114b of a plastics material.

Waist strap 116 has two portions: a left portion 118a permanently attached (such as with a rivet or bolt 119a) at one end to left side wall 106a, and a right portion 118b permanently attached (such as with a rivet or bolt 119b) at one end to right side wall 106b, in each case at points near the lower forward periphery of the respective side wall 106a, 106. The other (unattached) ends of left portion 118a of waist strap 116 and right portion 118b of waist strap 116 are provided with respective male buckle elements 120a, 120b, each of which defines an eyelet or aperture 122a, 122b to which may be releasably attached respective safety hooks 114a, 114b.

Rear wall 104 also has a storage aperture 124, centered in and towards the upper periphery of rear wall 104. Storage aperture 124 is configured to facilitate storage of child seat 100 when not in use, as is described below.

Though not depicted in figure 1, protective shell 102 is typically upholstered on at least its inner face (i.e. that face predominantly visible in figure 1). The upholstery can be in any suitable form, including toweling, fabric covered upholstery foam/polyurethane, or fabric covered expanded polystyrene or polypropylene.

Child seat 100 also includes a base 130 for supporting the bulk of a child's weight. Base 130 includes, in this embodiment, a rigid or semi-rigid lower support board (or, for example, polypropylene) surmounted by a cushioning material (such of polyurethane) for the comfort of the child (neither of which is shown), and a durable covering 132 of fabric, vinyl, leather, swede, fleece or other suitable material. Base 130 also includes an anchor strap 134, which is of woven polyester and permanently secured to the support board and extends through and above the cushioning material and covering. Anchor strap 134 is provided at its terminal end with a female buckle element 136 adapted to releasably engage male buckle elements 120a, 120b of waist strap 116 in snap-lock fashion; this engagement is effected by sliding buckle elements 120a, 120b in the direction arrow 138 into female buckle element 136.

In addition, base 130 includes an oblique through hole 140 for accommodating an extendible handle stem of the item of luggage. In an alternative embodiment, the base portion includes two through holes, being adapted for use with an item of hand luggage the handle of which has dual handle stems. Also, it will be noted that through hole 140 is generally elliptical in cross section: through hole 140 is configured-in terms of cross-sectional shape, size and orientation-to accommodate a handle stem of comparable cross section, so as to provide a snug fit. This advantageously reduces movement of base 130 about the handle stem when in use. In other embodiments, the through hole or holes are also advantageously configured to fit the handle stem or stems with which the through hole or holes are intended to accommodate.

In this embodiment, base 130 is not integral with or attached to the other components of child seat 100 (though attachable thereto with anchor strap 134). In some other embodiments, a base may be provided that is either integral with the other components of the child seat or attached to the other components in an manner (permanent or otherwise) that does not depend on such an anchor strap.

In still further embodiments, a base may be omitted-especially if the child seat is configured to be used with a suitcase or other item of luggage shaped to provide a suitable seat for a child; in such embodiments (and others), an anchor strap may be omitted, with greater reliance being placed on a waist strap, or an anchor strap may be provided as a part of the item of luggage. In an alternative embodiment, a base may be provided but as a part of the suitcase or other item of luggage to which the child seat is configured to be fastened. (It will be noted that, in these embodiments, the protective shell provided with shoulder straps constitutes the upper portion of a child seat-the other or lower portion being provided by the surface of the item of luggage on which the child will sit.)

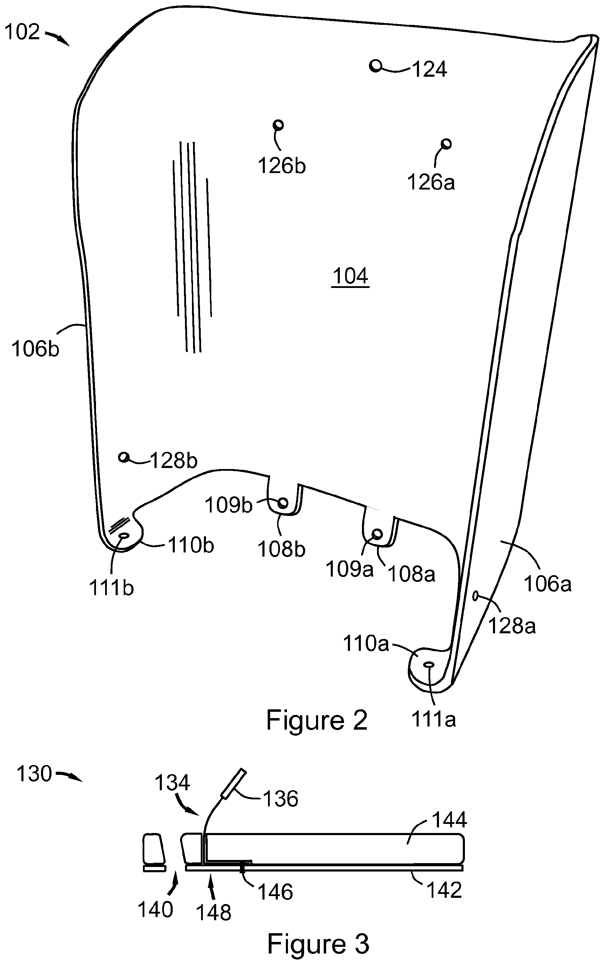

Figure 2 is a schematic view of protective shell 102. In this figure are depicted attachment points in the form of through holes 126a, 126b in rear wall 104 and through holes 128a, 128b in left and right side walls 106a, 106b. These attachment points are used to secure shoulder straps 112a, 112b and waist strap 116 to, respectively, rear wall 104 and left and right side walls 106a, 106b with, for example, bolts or rivets.

Also labeled in this view are the holes 109a, 109b, 111a, 111b in respective attachment tabs 108a, 108b, 110a, 110b.

Figure 3 is a schematic cross-sectional view of base 130 (through line A-A of figure 1). In this figure, covering 132 has been omitted for clarity. As described above, base 130 includes a support board 142 surmounted by a cushioning material 144.

Cushioning material 144 is optionally glued to support board 142. Anchor strap 134 is permanently secured to support board 142, such as with a plurality of rivets or bolts. In this embodiment, anchor strap 134 is secured to support board 142 by three rivets of which one is visible in this view at 146. The other two are either side of the plane of this view, adjacent to where anchor strap 134 passes through cushioning material 144 (i.e. approximately where indicated at 148).

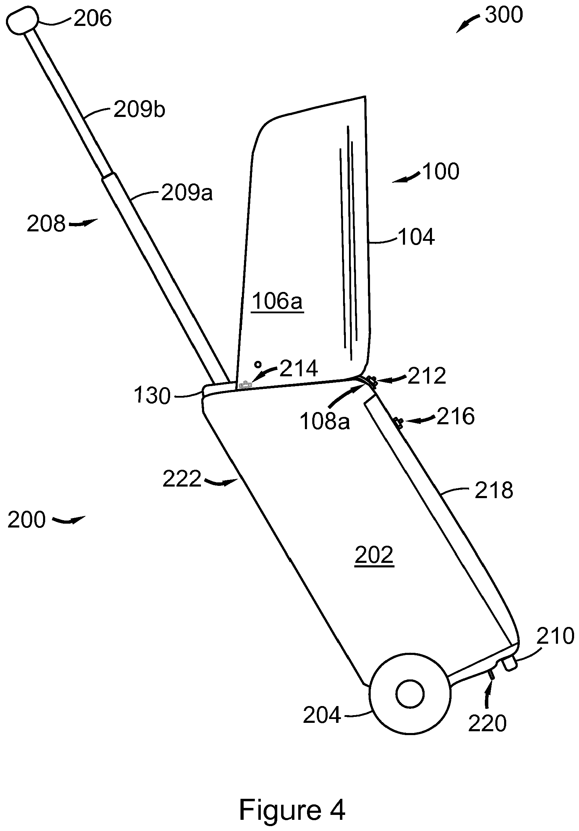

Figure 4 is a schematic elevational view of a suitcase pushchair 300 according to an embodiment of the present invention in a first configuration, the suitcase pushchair comprising child seat 100 of figure 1 and a suitcase in the form of hand luggage 200 (in this example 'carry-on' hand luggage). Child seat 100 and hand luggage 200 are fastened together in a first or 'in use' configuration. Hand luggage 200 includes a main body 202 for accommodating the user's belongings, a pair of wheels 204 (of which the nearer one is visible in this view), a handle 206, and a telescopic handle stem 208 (comprising a thicker proximal portion 209a and a thinner distal portion 209b partly received by proximal portion 209a), which supports handle 206. Handle 206 and handle stem 208 are depicted in their extended configuration. Hand luggage 200 also includes a rubber rest 210 so that hand luggage 200 can be left in an upright position (supported by rubber rest 210 and its wheels).

Furthermore, hand luggage 200 includes four projecting bolts positioned to coincide with holes 109a, 109b, 111a, 111b in respective attachment tabs 108a, 108b, 110a, 110b when child seat 100 is located on hand luggage 200 as depicted in this figure. Holes 109a, 109b, 111a, 111b 111b (or equivalently attachment tabs 108a, 108b, 110a, 110b) and the projecting bolts thus constitute complementary attachment points: the bolts, with corresponding nuts, facilitate the fastening of car seat 100 to hand luggage 200 to provide the illustrated configuration. Only attachment tab 108a of child seat 100 and projecting bolt 212 (with nut) are visible in this view (the former being secured to hand luggage 200 by the latter), but projecting bolt 214 (with nut) is shown in ghost. Projecting bolt 214 is received by hole 111a of attachment tab 110a of car seat 100 and secures attachment tab 110a to hand luggage 200. It will be noted that attachment tabs 108a, 108b and attachment tabs 110a, 110b are located, respectively, as far back and as far forward as possible, to maximize the stability of the fastening of child seat 100 to hand luggage 200.

Hand luggage 200 includes an additional projecting bolt 216 (with nut) located centrally in right-facing wall 218 (in this view) of main body 202. (Wall 218 is in fact a lid of hand luggage 200, for accessing the interior thereof.) Hand luggage 200 also includes two pins 220 that project downwardly (in this view) from main body 202, of which only the nearer is visible in this view. Bolt 216 and pins 220 are provided to facilitate the storage of child seat 100 on main body 202 in a second configuration (described below), when either child seat 100 or both child seat 100 and hand luggage 200 are not in use.

As may be noted from this figure, base 130 of child seat 100 is located about handle stem 208, typically being thus located during manufacture or assembly. Through hole 140 is sized and shaped to fit handle stem 208, so as to move little if at all relative to handle stem 208 during use. Optionally, however, base 130 may be secured to main body 202 of hand luggage 200 (whether releasably or permanently) so that base 130 does not move significantly relative to main body 202 when handle 206 and handle stem 208 are extended.

Thus, when child seat 100 is fastened to hand luggage 200, the combination of child seat 100 and hand luggage 200 constitutes suitcase pushchair 300.

Although not depicted in this figure, hand luggage 200 may advantageously also include a dolly wheel assembly that includes a pair of dolly wheels and which is pivotably attached to main body 202. This assembly may be attached to main body 202 at the forward face 222 thereof, desirably towards the upper periphery of forward face 222, and pivotable between a first or stowed position (against forward face 222) and a second or extended position. IN the latter position, the dolly wheels and wheels 204 of hand luggage 200 provide four points of contact with the ground or floor, such that hand luggage 200 (or equivalently suitcase pushchair 300) can remain with the illustrated attitude without external support (provided by, for example, a user).

In addition, hand luggage 200 may optionally include a handle for a child seated in child seat 100, located on handle stem 208. This handle may be in the form of-for example-a cross bar slidably mounted around distal portion 209b of handle stem 208. This handle may be of a plastics material that frictionally resists undesired displacement along distal portion 209b, and sized such that it cannot slide onto proximal portion 209a of handle stem 208, that portion being thicker than distal portion 209b. Consequently, this handle cannot slide lower (in this view) than the uppermost extent of proximal portion 209a.

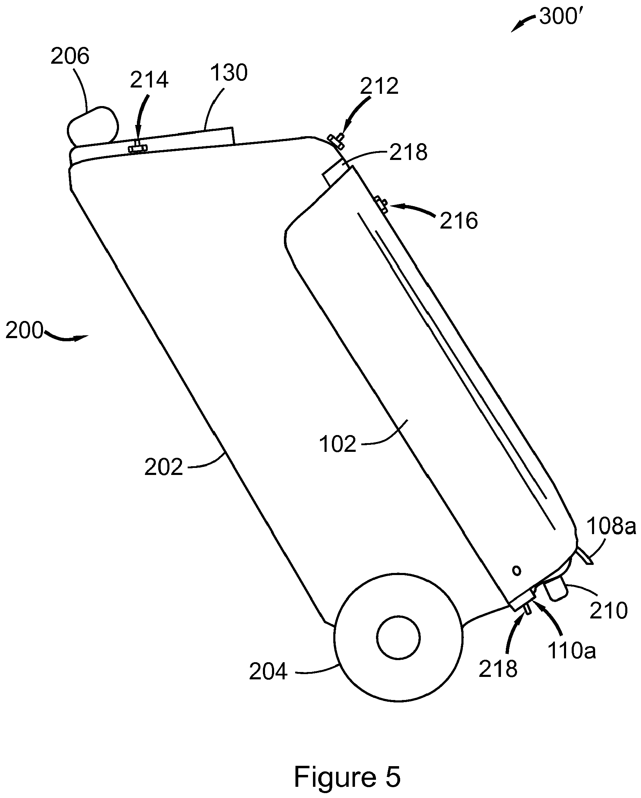

Figure 5 is a schematic elevational view of suitcase pushchair 300 , with child seat 100 fastened to hand luggage 200 in a second configuration in which at least child seat 100 is not in use. In this configuration, shell 102 of child seat 100 is attached to main body 202 of hand luggage 200 at three attachment points: additional projecting bolt 216 and pins 220. Thus, in this configuration, holes tabs 111a, 111b (or equivalently attachment tabs 110a, 110b) and storage aperture 124 of child seat 100, and pins 220 and additional projecting bolt 216 also constitute complementary attachment points (and, it will be noted, including some common elements with the complementary attachment points of the configuration shown in figure 4). In this configuration, attachment tabs 110a, 110b of child seat 100 are located on respective pins 220, and additional projecting bolt 216 is received in storage aperture 124 and secured with a corresponding nut. Pins 220 are angled towards wheels 204 so that attachment tabs 110a, 110b cannot slide off inadvertently once shell 102 is secured to main body 202 with additional projecting bolt 216 and corresponding nut.

In this configuration, base 130 remains in place, located about (retracted) handle stem 208, and shoulder straps 112a, 112b and waist strap 116 are contained between main body 202 of hand luggage 200 and shell 102 of child seat 100.

It will be noted that, in this configuration of this embodiment, left and right side walls 106a, 106b of shell 102 do not extend as far forward relative to main body 202 (i.e. to the left in this view) as they do in the first configuration (cf. figure 4). This is because the main body 202 of hand luggage 200 is broader (measured, for example, as the distance between wheels 204) than the width of shell 102 (measured, for example, as the sum of the widths of rear wall 104 and side walls 106a, 106b). Shell 102 is of polypropylene that is sufficiently flexible to be bent into each of two configurations, the first as shown in figures 1, 2 and 4, and a second, more open configuration as shown in figure 5. It will be appreciated that in other embodiments, pins (cf. 220) are located differently owing to different relative sizes of child seat and luggage. Likewise, the shell of other the child seat of other embodiments may be required to bend more or less than Shell 102 of the illustrated embodiment, also depending on the relative dimensions of child seat and luggage. For example, in some embodiments in which the child seat is the same size as that shown in the figures but the main body of the luggage is narrower with, for example, a wheel separation comparable to the separation of side walls 106a, 106b, it may be unnecessary to bend shell 102 between 'in use' and stored configurations. Indeed, an embodiment is envisaged in which the profiles of the shell of the child seat and the main body of the luggage correspond such that, in the second configuration (in which the child seat is not in use), the shell conforms to the shape of the main body without bending or other significant adjustment.

Such considerations may also influence the choice of material from which the shell of the child seat is to be manufactured. For example, if the shell must be bent between configurations, aluminium may be unsuitable. Alternatively, if the material of the shell is difficult to bend or if bending the shell is deemed undesirable, the shell may be manufactured in a plurality of parts that are then hinged together, such as with a durable fabric. In one example, the rear wall and side walls are manufactured as separate parts, and hinged together in this manner.

It will also be noted that shell 102 is located such that it is attached in part to the lid 218 of suitcase 200. However, shell 102 does not entirely cover lid 218 so, if the release mechanism of lid 218 is positioned at the upper periphery of lid 218, it remains possible to open suitcase 200 while shell 102 is located as shown.

Thus, the embodiments shown in the figures provide a child seat 100 for a suitcase pushchair as well as such a suitcase pushchair 300. Alternatively, hand luggage 200 may be viewed as convertible between an item of hand luggage 300 and a suitcase pushchair 300 by virtue of or through the use of child seat 100.

It should be noted that the phrases "in an embodiment" or "in one example" in various places throughout this specification do not necessarily refer to the same embodiment or example. Furthermore, the particular features, structures or characteristics of each aspect and embodiment of the invention may be combined in any suitable manner, or employed in any other aspect or embodiment where feasible and advantageous or desired. Likewise, in the following claims, any of the features of any of the claimed embodiments can be used in any other embodiment.

Thus, while there has been described what are believed to be the preferred embodiments of the invention, those skilled in the art will recognize that other and further modifications may be made thereto without departing from the invention.

It is to be understood that, if any prior art is referred to herein, such reference does not constitute an admission that the prior art forms a part of the common general knowledge in the art in any country.

In the claims which follow and in the preceding description of the invention, except where the context requires otherwise owing to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. An upper portion of a child seat, the child seat being configured to be a part of a suitcase pushchair, the upper portion comprising:
a seatback (104);
one or more retaining straps (112a, 112b, 116) for securing a child;
a first set of attachment points (108a, 108b, 110a, 110b) and a second set of attachment points (110a, 110b, 124);
wherein the first set of attachment points (108a, 108b, 110a, 110b) are located to correspond to first complementary attachment points (212, 214) of a wheeled suitcase (200) so that in a first configuration the upper portion (102) can be releasably fastened to the suitcase (200) and, when the upper portion (102) is fastened to the suitcase (200), the upper portion (102) and the suitcase (200) constitute a suitcase pushchair (300); and
the second set of attachment points (110a, 110b, 124) are located to correspond to second complementary attachment points (220, 216) of the suitcase (200) so that in a second configuration the upper portion (102) can be releasably fastened to an external portion of the suitcase to which the upper portion (102) conforms or is conformable.

2. An upper portion of a child seat as claimed in claim 1, comprising left and right side walls (106a, 106b).

3. An upper portion of a child seat as claimed in claim 2, wherein the side walls (106a, 106b) are integral with the seatback (104).

4. An upper portion of a child seat as claimed in either claim 2 or 3, wherein each of the side walls (106a, 106b) includes at least one attachment point (110a, 110b) of the first set of attachment points (108a, 108b, 110a, 110b).

5. An upper portion of a child seat as claimed in any one of the preceding claims, wherein the retaining straps (112a, 112b, 116) comprise two shoulder straps (112a, 112b) and a waist strap (116).

6. An upper portion of a child seat as claimed in claim 5, wherein the shoulder straps (112a, 112b) are releasably connectable to the waist strap (116).

7. An upper portion of a child seat as claimed in any one of the preceding claims, wherein the first set of attachment points (108a, 108b, 110a, 110b) and the second set of attachment points (110a, 110b, 124) overlap (110a, 110b).

8. An upper portion of a child seat as claimed in any one of the preceding claims, wherein:
one or more attachment points of the first (108a, 108b, 110a, 110b) and/or second (110a, 110b, 124) set of attachment points comprise apertures (109a, 109b, 111a, 111b, 124) corresponding to complementary bolts (212, 214, 216) or retaining pins (220) of the suitcase (200); and/or
one or more attachment points of the first and/or second set of attachment points comprise keyed apertures corresponding to headed posts of the suitcase; and/or
one or more attachment points of the first and/or second set of attachment points comprise headed posts corresponding to keyed apertures of the suitcase; and/or
one or more attachment points of the first and/or second set of attachment points comprise snap fastener elements corresponding to complementary snap fastener elements of the suitcase.

9. An upper portion of a child seat as claimed in any one of the preceding claims, where the upper portion (102) is foldable or bendable so as to conform to the external portion of the suitcase (200).

10. A child seat configured to be a part of a suitcase pushchair, the child seat (100) comprising:
an upper portion (102) as claimed in any one of the preceding claims; and
a base portion (130) attached or attachable to the upper portion (102) or to the suitcase (200).

11. A child seat as claimed in claim 10, wherein the base portion (130) comprises a further retaining strap (134) releasably securable to one or more of the retaining straps (112a, 112b, 116).

12. A child seat as claimed in either claim 10 or 11, wherein the base portion (130) includes one or more attachment points of the first set of attachment points.

13. A child seat as claimed in any one of claims 10 to 12, wherein the base portion (130) is configured to be mounted on or to a handle stem (208) of the suitcase (200).

14. A wheeled suitcase configured to be a part of a suitcase pushchair, the suitcase (200) comprising:
a first set of attachment points (212, 214) and a second set of attachment points (220, 216);
wherein the first set of attachment points (212, 214) are located to correspond to complementary first attachment points (108a, 108b, 110a, 110b) of an upper portion (102) of a child seat (100) as claimed in any one of claims 9 to 12 so that in a first configuration the suitcase (200) can be releasably fastened to the upper portion (102) and, when the suitcase (200) is fastened to the upper portion (102), the upper portion (102) and the suitcase (200) constitute a suitcase pushchair (300); and
the second set of attachment points (220, 216)are located to correspond to complementary second attachment points (110a, 110b, 124) of the upper portion (102) so that in a second configuration the upper portion (102) can be releasably fastened to an external portion of the suitcase (200) to which the upper portion (102) conforms or is conformable.

15. A convertible suitcase pushchair, comprising:
a child seat (100) as claimed in claim 10 to 13; and
a suitcase (200) as claimed in claim 14;
wherein the convertible suitcase pushchair is convertible between:
a first configuration (300) in which the child seat (100) is releasably fastened to the suitcase (200) such that the convertible suitcase pushchair can be employed simultaneously as a suitcase and a pushchair; and
a second configuration (300) in which at least the upper portion (102) of the child seat (100) is releasably fastened to an external portion of the suitcase (200) to which the upper portion (102) conforms or is conformable such that the convertible suitcase pushchair can be employed as a suitcase and not as a pushchair.
